# EUROPÄISCHE PATENTSCHRIFT

(11) **EP 0 653 289 B1**
(45) Veröffentlichungstag und Bekanntmachung des Hinweises auf die Patenterteilung: **15.04.1998**
(21) Anmeldenummer: 94117835.2
(22) Anmeldetag: 11.11.1994
(51) Int. Cl.: B29C 67/24, B28B 21/06, B28B 21/42, B28B 21/82, B28B 21/16

(54) **Verfahren und Vorrichtung zur Herstellung von Formkörpern aus Polymerbeton**
Process and device for making moulded products from concrete resin
Procédé et dispositif pour la fabrication d'éléments moulés en béton synthétique

(30) Priorität: 16.11.1993 DE 4339118
(43) Veröffentlichungstag der Anmeldung: 17.05.1995
(73) Patentinhaber: ILOMA AUTOMATISIERUNGSTECHNIK GmbH, D-49086 Osnabrück (DE)
(72) Erfinder: Brokmann, Manfred, D-49086 Osnabrück (DE)
(74) Vertreter: Busse & Busse Patentanwälte

(56) Entgegenhaltungen:
- WO-A-92/18308
- DE-A- 1 904 977
- DE-A- 2 412 192
- NL-C- 83 922
- US-A- 2 969 836
- US-A- 4 685 873

## Beschreibung

Die Erfindung bezieht sich auf ein Verfahren und eine Vorrichtung zur Herstellung von Rohren oder rohrähnlichen Formkörpern aus Polymerbeton.

Zur Herstellung von Rohren aus Polymerbeton finden Formvorrichtungen Verwendung, die einen Formenkern und einen Formmantel umfassen, die gemeinsam einen Formraum umgrenzen. Der Formraum der mit ihrer Hauptachse vertikal ausgerichteten Formvorrichtung wird mittels einer Füllvorrichtung mit Mineralgußmasse befüllt und diese als Ganzes gerüttelt. Einige Zeit nach Abschluß des Rüttelvorganges beginnt die Mineralgußmasse, die sich auf Umgebungstemperatur befindet, anzuhärten und nach dessen weitgehendem Abschluß des Aushärtevorgangs wird der Formkörper aus der Formvorrichtung ausgeschalt wird. Da während des Aushärtens das Rohr schrumpft und bei dem langsamen Ablauf des Härtungsprozesses das Rohr nicht vor dem Auftreten eines erheblichen Schrumpfens ausgeschalt werden kann, muß auf den Formenkern ein hülsenförmiger Ausgleichskörper aufgesetzt werden, der dann als Liner das fertige Rohr auskleidet.

Der Erfindung liegt die Aufgabe zugrunde, ein Verfahren und eine Vorrichtung zur Herstellung von Formkörpern aus Polymerbeton zu schaffen, die ein Verkürzung und Vereinfachung des Herstellungsvorganges ermöglichen. Hierzu ist das Verfahren nach der Erfindung gekennzeichnet durch die Merkmale des Anspruchs 1 und die Vorrichtung nach der Erfindung durch die Merkmale des Anspruchs 8.

Die Erfindung ermöglicht eine kontinuierliche oder quasi kontinuierliche Rohrherstellung mit einer auf einen Bruchteil verkürzten Herstellungszeit, während gleichzeitig die Notwendigkeit zum Einsatz von Linern als Ausgleichselement entfällt. Die Mineralgußmasse zeichnet sich durch eine lange Topfzeit aus und gewährleistet eine Handhabbarkeit frei von zeitlichen Einschränkungen, da der Härtevorgang erst bei gezielter Wärmezufuhr ausgelöst wird und dann auf dem erhöhten Temperaturniveau besonders schnell abläuft, so daß im Bereich der Schalungsflächen frühzeitig eine Formstabilität entsteht, die ein Entfernen des Kerns aus schrumpfenden Rohrbereichen vor einem Auftreten von erheblichen Schrumpfspannungen erlaubt.

Zahlreiche weitere Ausgestaltungen des Verfahrens sind in den Ansprüchen 2 bis 7 und der Vorrichtung in den Ansprüchen 8 bis 23 gekennzeichnet.

Weitere Vorteile und Einzelheiten der Erfindung ergeben sich aus der nachfolgenden Beschreibung und der Zeichnung, in der zwei Ausführungsbeispiele einer Formvorrichtung nach der Erfindung schematisch veranschaulicht sind. Im einzelnen zeigen:
- Fig. 1: eine Seitenansicht einer ersten Ausführung einer ersten Ausführung einer Formvorrichtung nach der Erfindung,
- Fig. 2: eine schematische Draufsicht auf die Vorrichtung nach Fig. 1 mit zugeordneten Magazinen,
- Fig. 3: eine schematische Teildarstellung der Vorrichtung nach Fig. 1 zur Veranschaulichung der Führung und des Antriebs von Mantelsegmentteilen,
- Fig. 4: eine Seitenansicht zu Fig. 3,
- Fig. 5: eine Ausschnittdarstellung, teilweise im Schnitt, zur Veranschaulichung der Ausbildung und Anordnung von Wandsegmentteilen für die Herstellung von Muffenrohren,
- Fig. 6: eine Darstellung ähnlich Fig. 1 zur Veranschaulichung einer zweiten Ausführung einer Formvorrichtung nach der Erfindung,
- Fig. 7: eine schematische Draufsicht zu Fig. 6, und
- Fig. 8: eine Einzeldarstellung des Formenkerns zur Veranschaulichung unterschiedlicher Behandlungszonen, teilweise im Schnitt.

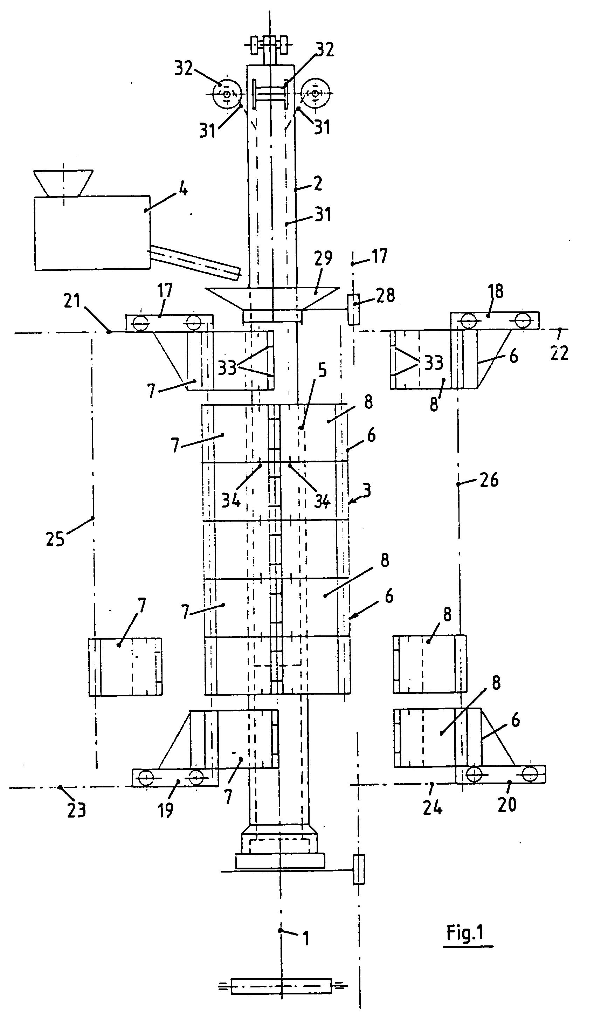

Die in Fig. 1 bis 5 veranschaulichte Formvorrichtung hat eine vertikale Hauptachse 1 und umfaßt einen Formenkern 2, einen als Ganzes mit 3 bezeichneten Formenmantel und eine Füllvorrichtung 4. Formenkern 2 und Formenmantel 3 umgrenzen gemeinsam einen Formraum 5, der von einer Füllvorrichtung 4 mit Polymerbeton bildender Mineralgußmasse beschickt wird.

Der Formenmantel 3besteht aus einer Anzahl von übereinander angeordneten, bei dem dargestellten Ausführungsbeispiel zweiteiligen Mantelsegmenten 6, deren Segmentteile 7,8 jeweils aus einer ringförmigen geschlossenen Betriebsstellung, wie sie in Fig. 1 fünf Mantelsegmente 6 aufweisen, in eine Außerbetriebsstellung auseinanderbewegbar sind, wie das in Fig. 1 ebenfalls in verschiedenen Stadien veranschaulicht ist.

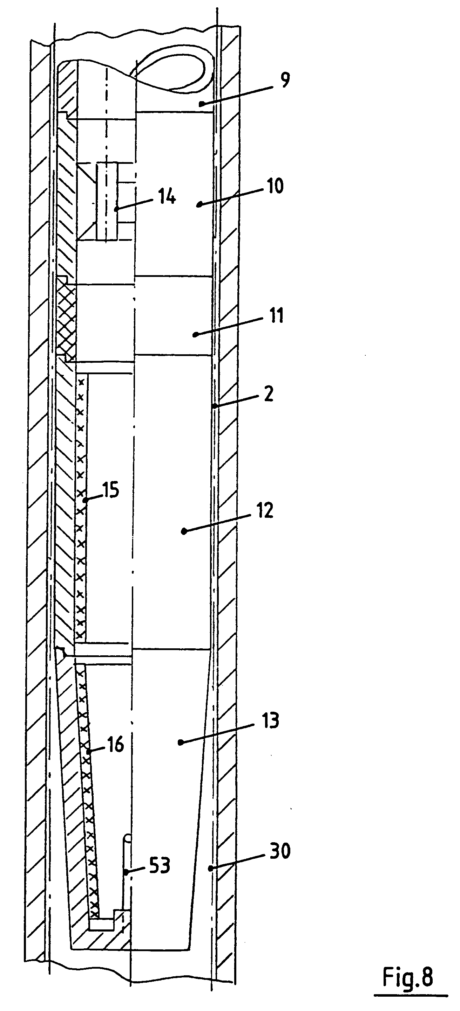

Der Formenkern 2 ist in eine Anzahl axial begrenzter Abschnitte unterteilt, die unterschiedliche Behandlungszonen bilden. Die Fig. 8 veranschaulicht beispielsweise die Unterteilung in fünf Abschnitte 9,10,11,12 und 13, von denen der Abschnitt 9 eine Neutralzone, der Abschnitt 10 eine Rüttelzone, der Abschnitt 11 eine Dämpfungszone, der Abschnitt 12 eine Heizzone und der Abschnitt 13 eine Heiz- oder Kühlzone bildet.

Die Neutralzone 9 besteht lediglich aus einem Trägerrohr, von dem besondere Behandlungswirkungen auf eine umgebende Mineralgußmasse nicht ausgehen. Die Rüttelzone 10 umfaßt eine oder mehrere geeignete Rüttler 14, so daß in der Rüttelzone der Formenkern 2 auf umgebende Mineralgußmasse eine Rüttelwirkung ausübt. Die Dämpfungszone 11 dient dazu, die Fortpflanzung von Rüttelschwingungen in den unteren Bereich des Formenkerns 2 möglichst weitgehend zu unterbinden. In diesem Abschnitt besteht die Wandung des Formenkerns 2 bevorzugt aus einem schwingungsdämpfenden Material, z.B. Polymerbeton. Grundsätzlich können alle geeigneten Dämpfungsmaterialien, die die notwendige Festigkeit einerseits und Temperaturbeständigkeit andererseits mitbringen, Anwendung finden.

Die Heizzone 12 umfaßt Heizelemente 15, beispielsweise eine der Kernwandung zugeordnete elektrische Heizspirale oder eine ein dampfförmiges oder flüssiges Heizmedium führende Wärmetauscherspirale. Es versteht sich, daß durch geeignete Steuer- und/oder Regelglieder der Heizzone 12 eine präzise Temperaturführung vorgegeben werden kann. Dies gilt auch für die Heiz- oder Kühlzone 13, in der Heiz- oder Kühlglieder 16 der Kernwandung zugeordnet sind.

Die Mantelsegmente 6 haben bevorzugt eine untereinander gleiche Höhe, z.B. von 25 oder 50 cm, und sind zur Bildung eines in axialer Richtung in der Höhe stufenweise anwachsenden Formenmantels 3 aufeinanderfolgend übereinander anbringbar und zum geschlossenen Formenmantel 3 zusammensetzbar.

Bei der Vorrichtung nach Fig. 1 sind die Mantelsegmente 6 in der Betriebsstellung der Segmentteile 7,8 aus einer oberen Endstellung axial entlang dem Formenkern 2 in eine untere Endstellung und aus dieser einzeln nacheinander nach jeweiligem Übergang der Segmentteile 7,8 in die Außerbetriebsstellung zurück in die obere Endstellung bewegbar. In Fig. 1 befindet sich in der oberen Endstellung ein Mantelsegment 6, dessen Segmentteil 7 sich bereits in der Betriebsstellung und dessen Segmentteil sich noch in der Außerbetriebsstellung befindet, und in der unteren Endstellung befindet sich ein Mantelsegment 6, dessen Segmentteil 8 bereits aus der Betriebsstellung in die Außenbetriebsstellung überführt wurde, während sich das Segmentteil 7 noch in der der Betriebsstellung befindet.

Zum Öffnen und Schließen der Mantelsegmente 6 sind sowohl im Bereich der oberen, als auch im Bereich der unteren Endstellung verfahrbare Werkzeugträger 17,18 bzw. 19,20 vorgesehen, die mittels nicht näher veranschaulichter Greifmittel jeweils einen Segmentteil 7,8 entlang von lediglich schematisch angedeuteten Horizontalführungen 21,22,23,24 horizontal und zudem in der Betriebsstellung begrenzt vertikal verfahren können.

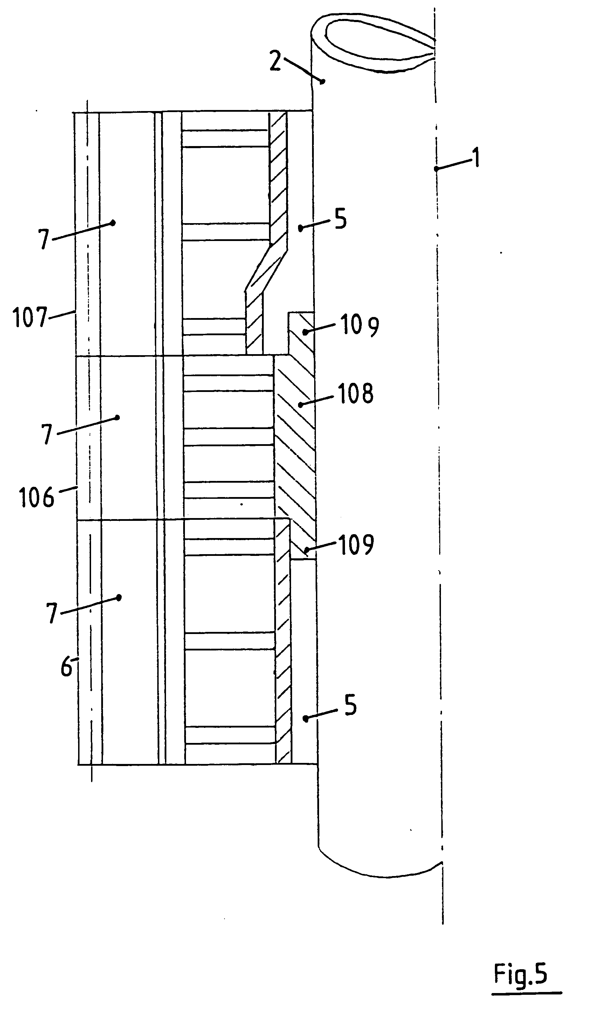

Durch eine vertikale begrenzte Abwärtsbewegung kann ein in der oberen Endstellung befindliches Mantelsegment 6 an das unterseitig benachbarte Mantelsegment 6 angeschlossen werden, während das jeweils unterste Mantelsegment des Formenmantels 3, das sich der unteren Endstellung annähert, durch eine begrenzte Abwärtsbewegung aus dem Verbund mit den darüber befindlichen Mantelsegmenten 6 gelöst und in die untere Endstellung überführt werden kann, in der dann die Segmentteile 7,8 in die Außerbetriebsstellung überführt werden. Dies ermöglicht z.B. den Einsatz eines Sonder-Mantelsegments 106 (Fig. 5), das in Verbindung mit einem Sonder-Mantelsegment 107 die Bildung einer Rohrmuffe am unteren Ende zu fertigender Muffenrohre ermöglicht.

Das Sonder-Mantelsegment 106 umfaßt dabei einen Innenformteil 108, der sich mit oberen und unteren Ansätzen 109 jeweils in den Formraum 5 zwischen dem Formenkern 2 und den jeweils benachbarten Mantelsegmenten 6 bzw. 107 hineinerstreckt und im übrigen den Formraum 5 in seinem Bereich vollständig ausfüllt.

Aus der unteren Endstellung gelangen die in Außerbetriebstellung befindlichen Segmentteile 7,8 mit Hilfe von schematisch angedeuteten Vertikalführungen 25,26 und nicht näher dargestellten Bewegungsantrieben wieder in die obere Endstellung, in der sie in die Betriebsstellung überführt und mit den übrigen in Betriebsstellung befindlichen Mantelsegmenten 6 des Formenmantels 3 vereinigt werden.

Auf ihrem aufwärtsgerichteten Rücklaufweg können die Mantelsegmentteile 7,8 vorübergehend um eine vertikale Achse in eine Inspektions- und Wartestellung geklappt werden.

Zu Beginn eines Herstellungsvorganges für ein Muffenrohr befindet sich beispielsweise ein Mantelsegment 107 in bzw. nahe der oberen Endstellung, und unter diesem ist ein Mantelsegment 106 in Betriebstellung, das mit seinem Teil 109 an der Formgebung der Muffe beteiligt ist und das im übrigen den Formraum 5 zwischen dem Mantelsegment 107 und dem Formenkern 2 unterseitig verschließt. Auf diesen nur von zwei Mantelsegmenten gebildeten Formenmantel wird nun oberseitig der entlang einer Führung 27 mittels eines Antriebs 28 begrenzt auf und abbewegbare Trichter 29 der Füllvorrichtung 4 abgesenkt und die Befüllung des Formraumes 5 im Wandsegment 107 mit Mineralgießmasse begonnen. Zur gleichförmigen Verteilung der Mineralgußmasse um den Umfang des Formenkerns 2 herum kann der Trichter 29 drehbar oder hin- und herschwenkbar sein und geeignete Verteilerelemente aufweisen. Auch ist eine Rüttelbeaufschlagung des Trichters 29 zur Sicherung eines gleichmäßigen Ausfließens von Mineralgußmasse aus dem Trichter 29 in den Formraum 5 denkbar.

Während der Befüllung bewegen sich die beiden zu Anfang den Formenmantel 3 bildenden Mantelsegmente 106,107 stetig abwärts, wobei der Trichter 29 und gegebenenfalls die Füllvorrichtung 4 ebenfalls abwärts bewegt werden, um während des Befüllvorganges die räumliche Zuordnung der Teile zueinander zu erhalten.

Sobald der Formraum 5 nahezu befüllt ist, wird der Trichter 29 gegebenenfalls mitsamt Füllvorrichtung 4 in seine obere Füllausgangsstellung hochgefahren und die Werkzeugträger 17,18 verfahren die Segmentteile 7,8 eines normalen Mantelsegmentes 6 in dessen oberer Endstellung in die geschlossene Betriebsstellung, in der sie wie zuvor schon die Mantelsegmente 106,107 untereinander durch die bei 33 lediglich schematisch angedeuteten Verriegelungsglieder untereinander verriegelt werden. Sodann wird das so gebildete betriebsbereite Mantelsegment 6 auf das unterseitig benachbarte Mantelsegment 107 aufgesetzt und mit diesem durch die lediglich schematisch bei 34 angedeuteten Verriegelungsglieder verriegelt. Durch solche Verriegelungsglieder sind sämtliche Bestandteile des in Betrieb befindlichen Formenmantels 3 gehörenden Mantelsegmente 6,106,107 untereinander verriegelt.

Während des Hochfahrens des Trichters 30, des Einfahrens der Segmentteile 7,8 eines weiteren Mantelsegments 6 und dessen Absenken auf den Formenmantel 3 kann dessen Abwärtsbewegung gestoppt oder verlangsamt werden, jedoch ist auch ein kontinuierlicher Weiterlauf möglich.

Zugleich mit der Absenkung des neuen Mantelsegmentes 6 wird nun auch wieder der Trichter 30, gegebenenfalls mitsamt Füllvorrichtung 30 in Betriebsstellung abgesenkt und der Befüllungsvorgang des Formraumes 5 fortgesetzt. Diese Vorgänge wiederholen sich, bis sämtiche für die Bildung des gewünschten Muffenrohres benötigten Mantelsegmente zum Formenmantel 3 zusammengesetzt sind. Dies entspricht etwa der Darstellung der Teile in Fig. 1, jedoch ist in dieser bereits ein Mantelsegment in der Rücklaufstrecke auf den Führungen 25,26 dargestellt, das dem Mantelsegment 106 entsprechen kann, und das nachfolgende Mantelsegment 107 befindet sich in der unteren Endstellung und im Übergang zur Außerbetriebsstellung, um dann seinerseits den Rücklauf zur oberen Endstellung hin anzutreten. Sobald das Mantelsegment 106 infolge der Führung der Mantelsegmente in einem geschlossenen Kreislauf die obere Endstellung erreicht hat und an das obere Ende des Formenmantels 3 angeschlossen ist, beginnt der Herstellungsvorgang für ein nachfolgendes Muffenrohr.

Der Formenkern 2 ist mit seinen Behandlungszonen dem Formenmantel 3 derart zugeordnet, daß sich die Rüttelzone 10 in Höhe des die obere Endstellung verlassendes Mantelsegmentes und des sich darunter anschließenden Mantelsegmentes befindet. Im Zuge der kontinuierlichen Abwärtsbewegung der Mantelsegmente während der Rohrherstellung gelangt zunächst die Mineralgußmasse innerhalb des Mantelsegmentes 107 aus dem Bereich der Rüttelzone 10 in den Bereich der Dämpfungszone 11 des Formenkerns und nachfolgend in den Bereich der Heizzone 12, in der nun die Innenfläche der Mineralgußmasse des im werden befindlichen Rohres fortschreitend erwärmt wird und dadurch eine Temperatur erhält, bei der der Härtevorgang in der Mineralgußmasse beginnt, der seinerseits Wärme frei setzt, so daß eine Aushärtung von innen nach außen erfolgt.

Zu diesem Zweck wird der Mineralgußmasse vor dem Füllvorgang und im Zuge des üblichen Anmischvorganges der Mineralgußmasse aus ihren üblichen Bestandteilen ein Härter zugesetzt, der aufgrund seiner Beschaffenheit die Auslösetemperatur für den Härtevorgang des härtbaren Anteils der Mineralgußmasse auf einen Wert anhebt, die beispielsweise 65 oder 80° C betragen kann, vorzugsweise im Bereich von 50 bis 90° C liegt und jedenfalls höher ist als die Umgebungstemperatur, in der der Herstellungsvorgang abläuft. Auf diese Weise ist sichergestellt, daß der Härtevorgang nur aufgrund einer gezielten Auslösung beginnt und die Mineralgußmasse eine Topfzeit hat, die einen Herstellungsvorgang frei von zeitlichen Beschränkungen ermöglicht.

Infolge eines Beginns des Aushärtevorganges mit höherer Auslösetemperatur verringert sich auch die Zeitdauer für die Aushärtung, die nochmals wesentlich verkürzt werden kann, wenn die Mineralgußmasse nicht nur innenseitig, sondern auch außenseitig erwärmt wird, um einen gleichzeitig von der Innen- und von der Außenseite zur Wandungsmitte hin fortschreitenden Härtevorgang auszulösen. Auf diese Weise und zudem gegebenenfalsl begünstigt durch Zugabe eines Aushärtebeschleunigers, z.B. eines Kobalt-Beschleunigers, kann der Aushärtevorgang so stark beschleunigt und z.B. auf wenige Minuten reduziert werden, daß die Rohr-Herstellungsgeschwindigkeit im wesentlichen nur noch durch den Befüllvorgang Befüllvorgang des Formraums 5 bestimmt wird.

Mineralgußmassen bzw. Polymerbetone sind in ihrer Zusammensetzung grundsätzlich bekannt. Sie bestehen aus einem Reaktionsharz (Polyester, Epoxide, Metacrylate, Phenole, Furane, Vinylester etc.) und aus Füllstoffen (Quarzsande mit verschiedener Körnung in gut abgestimmten Sieblinien, Granitsplit, Quarzmehl, Aluminiumtrihydrat, Kalziumkarbonat, Marmor- und Schlackenkörnungen etc.). Der Anteil an Reaktionsharz liegt beispielsweise bei etwa 10%, der der Füllstoffe bei etwa 90% und der an Härtern und Beschleunigern bei einigen Zehntel %. Diese Anteile können jedoch je nach Bedarf erheblich verändert werden. Als Härtemittel kommen alle solche in Betracht, die eine schnelle Aushärtung bei einer Temperatur oberhalb der Umgebungstemperatur sichern, beispielsweise solche auf Peroxydbasis. Als Beschleuniger können Aminbeschleuniger, z.B. Dimetylparatoluidin oder vorteilhaft Kobaltbeschleuniger, z.B. Kobaltoktoad, Anwendung finden.

Nach Auslösen des Härtevorganges durch Passieren der Heizzone 12 des Formenkerns 2 gelangt die im Aushärten begriffene Mineralgußmasse in den Bereich des nachfolgenden Abschnitts 13 des Formenkerns 2, der eine leichte, beispielsweise bei 2° liegende Konizität aufweist und seinerseits eine Heiz- oder auch eine Kühlzone bildet. Infolge des Übergangs in einen sich innenseitig konisch nach unten erweiternde Zone kann das fortschreitend aushärtende Rohr die im Zuge der Aushärtung auftretende Schrumpfung ausführen, ohne durch den Formenkern 2 daran gehindert zu werden und Beschädigungen zu erfahren.

In Fällen, in denen der Aushärtevorgang zu einer hohen Erwärmung führt, wie dies beispielsweise bei Rohren mit größeren Wanddicken der Fall ist, kann es zweckmäßig sein, die Wandung des Formenkerns 2 im Bereich der Behandlungszone 13 zu kühlen, um in diesem Bereich den Formenkern 2 und den gegenüberliegenden Rohrbereich vor übermäßigen Temperaturen zu schützen. Die Behandlungszone 13 kann aber auch noch als weitere Heizzone eingesetzt werden, wenn dies aus Gründen der weiteren Beschleunigung des Aushärtevorgangs im Einzelfall vorteilhaft ist.

Da im Zuge des Herstellungsvorganges die Mineralgußmasse im Formraum 5 eine Bewegung relativ zum Formenkern 2 ausführt, ist zur Reibungsminderung der Formenkern 2 über die gesamte Länge seines Arbeitsbereiches von einem Gleitfilm überzogen, der aus einer Gleitflüssigkeit bestehen kann, die aus über den Umfang und die Höhe des Formenkerns verteilt angeordneten Austrittsöffnungen austreten und mengenmäßig dosiert werden kann.

Statt dessen kann der Gleitfilm aber auch von einer Schlauchfolie 30 gebildet sein, die aus einem Vorratsbehälter am oberen Ende des Formenkerns 2 abgezogen werden kann und von der Mineralgußmasse mitgenommen wird. Diese Schlauchfolie 30 kann nahtlos ausgebildet sein oder aus mehreren flachen Bahnen 31 bestehen, die vor dem Einlauf in den Formenmantel 3 untereinander fortlaufend zu einem Schlauch zusammengeschweißt, -gesiegelt oder -geklebt werden und von Vorratsrollen 32 am oberen Ende des Formenkerns 2 ablaufen.

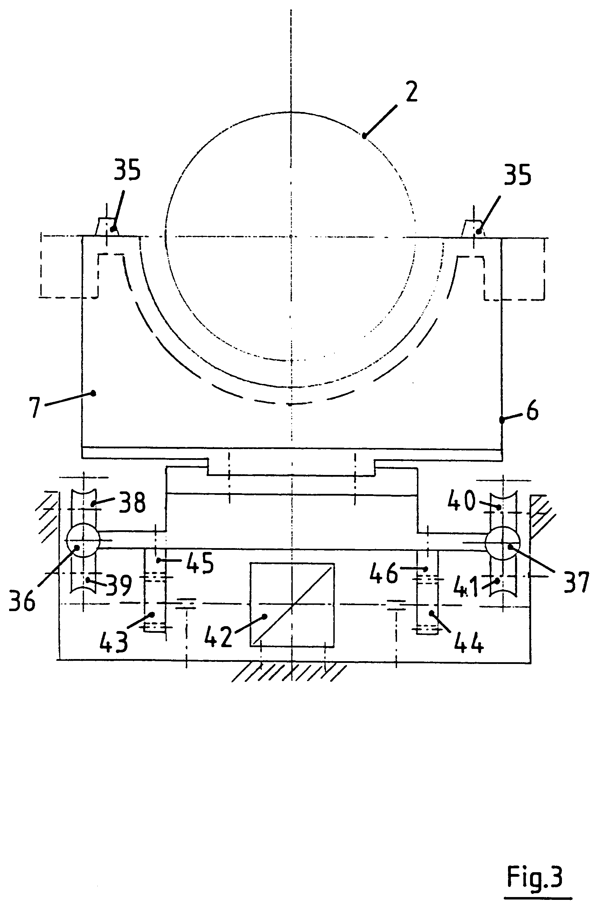

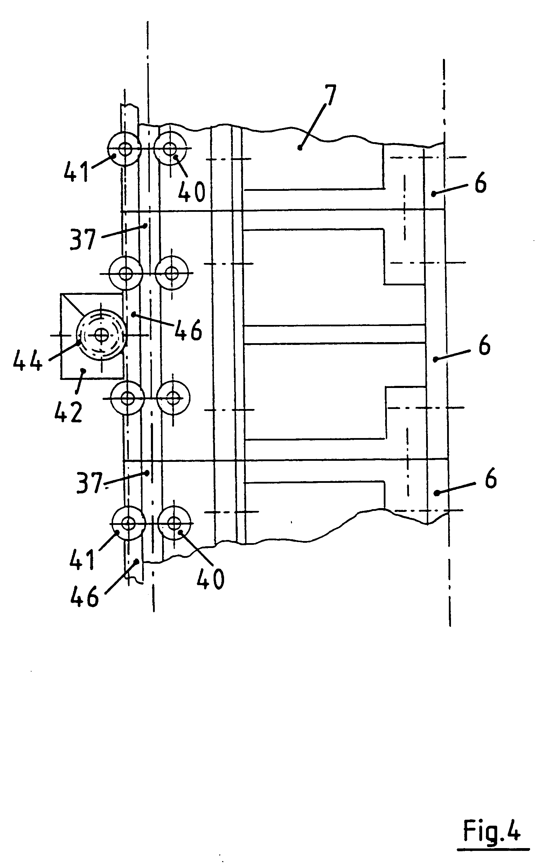

Zur Führung der Mantelsegmente können alle bekannten und geeigneten Führungsvorrichtungen Verwendung finden. Dies gilt auch für die Antriebsmittel zum Bewegungsantrieb der Mantelsegmente. Die in Fig. 3 und 4 veranschaulichte Ausführung einer Führung und eines Antriebs eines Segmentteils 7 eines Mantelsegmentes 6 ist daher lediglich als ein Ausführungsbeispiel zu verstehen.

Wie sich der Fig. 3 und 4 entnehmen läßt, ist das Mantelsegment 7, das vorderseitig Zentrierzapfen 35 aufweist, rückseitig mit vertikalen Führungszylindern 36,37 versehen, die von Führungsrollenpaaren 38,39 bzw. 40,41 geführt werden. Solche Führungsrollenpaare sichern die Führung sowohl bei der Abwärtsbewegung entlang dem Formenkern 2 als auch bei der Aufwärtsbewegung längs der Führungen 25,26. Als Bewegungsantrieb können Getriebemotoren 42 Verwendung finden, die beispielsweise Zahnräder 43,44 antreiben, die mit Zahnstangensegmenten 45,46 an der Rückseite der Mantelsegmente kämmen. Statt dessen ist es aber beispielsweise auch möglich, die Mantelsegmente jeweils rückseitig an Ketten zu befestigen und diese entlang geeigneten Führungsbahnen zu führen, wie dies grundsätzlich bei Vorrichtungen zum Formen von Wellrohren bekannt ist.

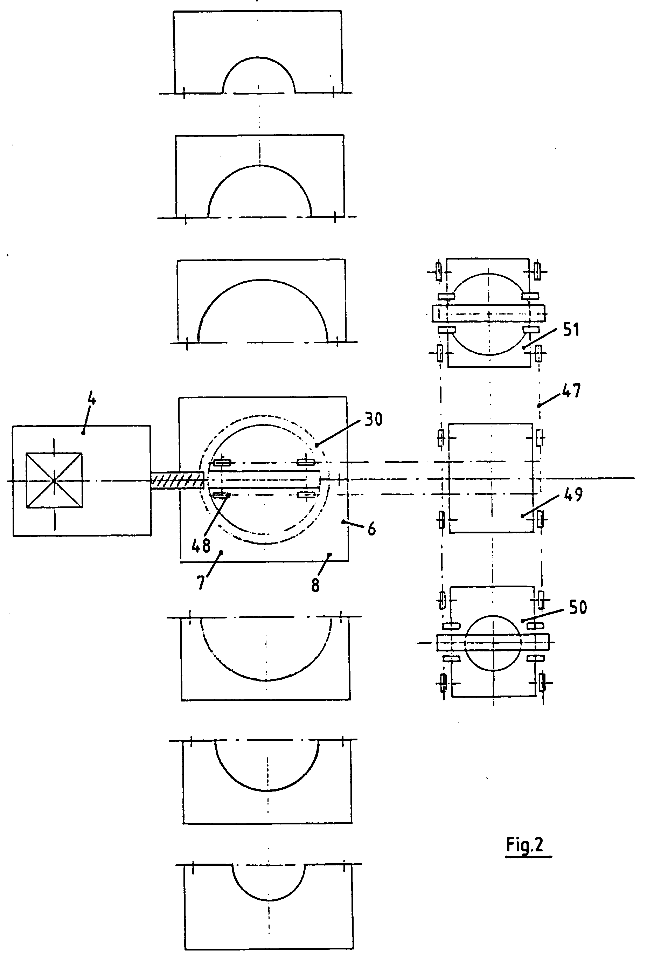

Zur schnellen Auswechslung der Teile für die Herstellung von Rohren unterschiedlicher Abmessungen kann der Formenkern 2 beispielsweise durch einen Hubvorgang aus dem Formenmantel 3 herausgehoben und mit Hilfe seiner am oberen Ende angebrachten Laufrollen 48 in ein Magazin 47 verfahren werden, in dem der Formenkern 2 dann an einem Trägerwagen 49 hängend aufbewahrt werden kann, während ein Formenkern eines anderen Kalibers der beispielsweise von einem Trägerwagen 50 oder 51 abgestützt ist, in die Betriebsstellung in der Formvorrichtung überführt wird. Zugehörige Mantelsegmente können ebenfalls, wie dies die Fig. 2 versinnbildlicht, Magazinen entnommen und in die Formvorrichtung überführt werden.

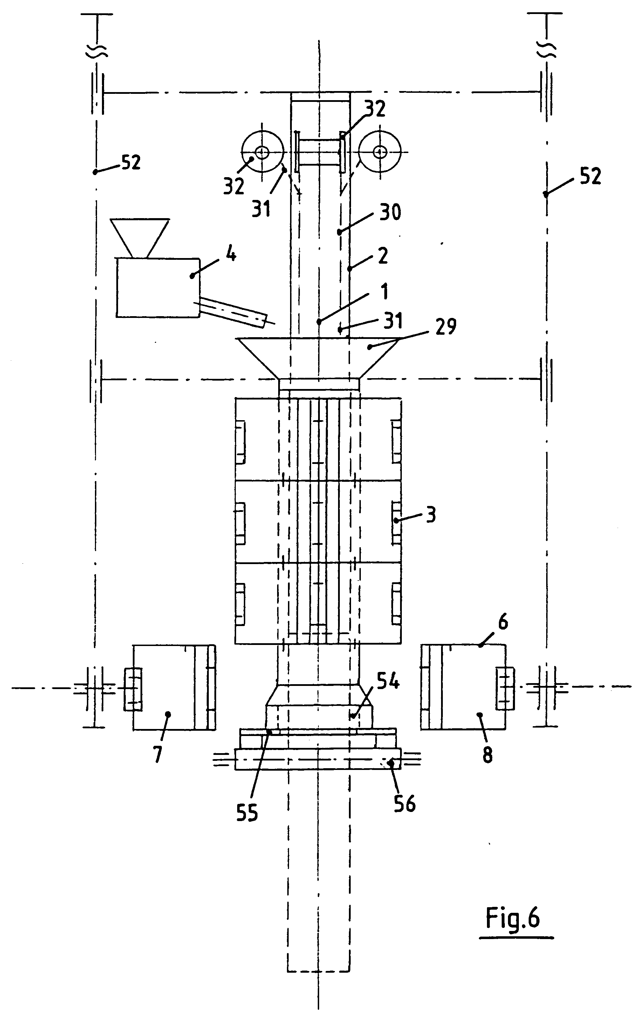

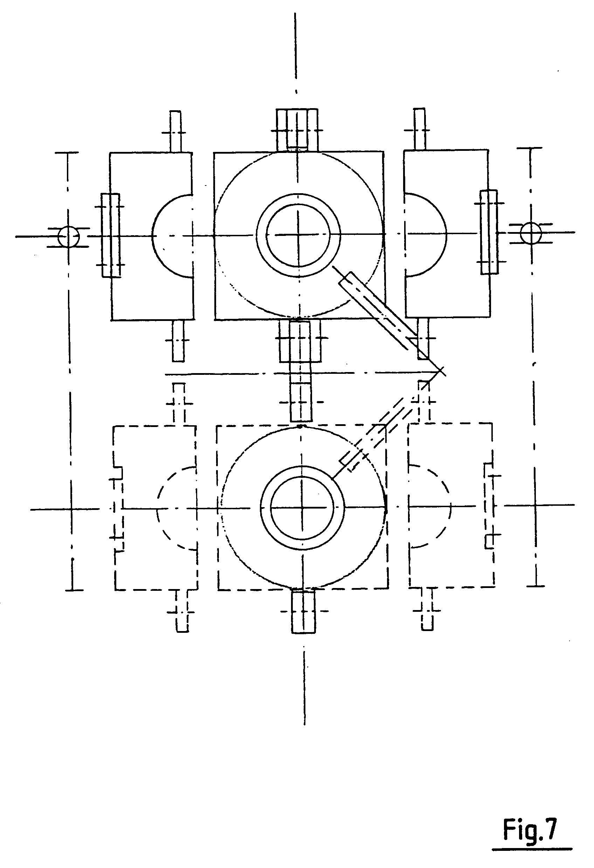

Die in Fig. 6 und 7 veranschaulichte zweite Ausführung einer Formvorrichtung nach der Erfindung verfügt über einen Formenmantel 3, der ein axial ortsfestes Vorrichtungsteil bildet. Der Formenkern 2 ist hingegen axial zwischen einer unteren Startstellung zu Beginn eines Herstellungsvorganges, die durch gestrichelte Linien angedeutet ist, und einer in ausgezogenen Linien veranschaulichten oberen Schlußstellung am Ende des Herstellungsvorganges verschiebbar. Zur Führung des Formenkerns 2 sind Vertikalführungen 52 vorgesehen, die zugleich auch als Vertikalführungen für den Trichter 29 gegebenenfalls mitsamt Zuführvorrichtung 4 dienen können. Als Hubantrieb kann eine Hubstange 53, die in Fig. 8 schematisch und abgebrochen veranschaulicht ist, Anwendung finden, die mit einem nicht dargestellten Kraftheber zusammenwirkt. Die Hubstange 53 kann auch als Zahnstange ausgebildet sein und mit einem Zahnrad eines nicht dargestellten Getriebemotors zusammenwirken. Geeignete Hubantriebsmittel sind auch für den Trichter 29 bzw. die Füllvorrichtung 4 vorgesehen, jedoch nicht im einzelnen dargestellt.

Die Fig. 5 veranschaulicht die Formvorrichtung in einem Stadium, in dem das Muffenrohr im Bereich seines Muffenendes bereits ausgeschalt ist. Zu Beginn eines Herstellungsvorganges befindet sich jedoch nur das unterste Mantelsegment 6 in seiner geschlossenen Betriebsstellung statt in der dargestellten Außerbetriebstellung, wobei dieses Mantelsegment 6 bei Muffenrohren als herzustellenden Formkörpern wiederum entsprechend dem Sonder-Mantelsegment 106 ausgebildet sein kann.

Die Innenform der Muffe wird von einem gesonderten Muffenformkörper 54 gebildet, die den Formenkern 2 in dessen Betriebsausgangsstellung umgibt und auf einem Palettenkörper 55 angeordnet ist, der sich auf einem Förderer 56 abstützt. Die Teile 2,7,8,54 und 55 begrenzen zu Beginn des Herstellungsvorganges einen muffenförmigen Formraum von der Höhe des untersten Mantelsegmentes, mit dem der Herstellungsvorgang beginnt. Zu Beginn dieses Herstellungsvorganges befinden sich alle anderen Mantelsegmente 6 entweder in einer Außerbetriebsstellung oder in einer Betriebsstellung in einer anderen Fertigungsstation, wie das weiter unten noch erläutert wird. Zur Einleitung des Herstellungsvorganges wird der Trichter 29 mitsamt Füllvorrichtung 4 in eine untere Füllausgangsstellung abgesenkt und der Formraum im untersten Mantelsegment 6 mit Mineralgußmasse befüllt. Zu diesem Zeitpunkt befindet sich der Formenkern 2 in seiner Startstellung, in der seine Rüttelzone 10 etwa in der Höhe des untersten Mantelsegments gelegen ist, und bewegt sich während des Füllvorganges langsam kontinuierlich nach oben.

Nach Befüllung des Formraums im untersten Mantelsegment wird der Trichter 29 mitsamt Füllvorrichtung 4 ein Wegstück hochgefahren, nachdem zuvor der Befüllvorgang gestoppt wurde, und ein weiteres Mantelsegment 6 wird durch eine horizontale Schließbewegung seiner Segmentteile 7,8 in Betriebsstellung überführt und mit dem unterseitig benachbarten Mantelsegment 6 verriegelt. Danach wird der Trichter 29 in Betriebsposition oberhalb des neuen Mantelsegments 6 verbracht und mit der Befüllung des Formraums 5 in diesem Mantelsegment 6 begonnen. Zugleich bewegt sich der Formenkern 2 weiter nach oben, so daß die Rüttelzone 10 nunmehr auch in den Bereich des zweituntersten Mantelsegmentes 6 gelangt. Ist die Befüllung des Formraumes 5 auch dieses Mantelsegmentes erfolgt, wird in oben beschriebener Weise ein weiteres Mantelsegment 6 hinzugefügt. Dieser Vorgang wiederholt sich, bis sämtliche für die Herstellung eines vorgegebenen Rohres benötigten Mantelsegment 6 in Betriebsstellung gebracht sind. Bei dem Hinzufügen eines jeweiligen Mantelsegmentes 6 kann der Formenkern 2 seine mit dem Beginn des Befüllens des Formraumes des untersten Mantelsegments 6 begonnene Aufwärtsbewegung kontinuierlich fortsetzen. Im Zuge der weiteren Aufwärtsbewegung gelangt die Dämpfungszone 11 und anschließend die Heizzone 12 sowie die Heiz- oder Kühlzone 13 zunächst in den Bereich des untersten Mantelsegmentes 6 und anschließend nacheinander in den Bereich sämtlicher darüber befindlicher Mantelsegmente 6, so daß nach dem von unten nach oben fortschreitenden Befüllen und Rütteln nun auch der Aushärtevorgang fortschreitend von unten nach oben ausgelöst wird und abläuft. Auch hier ist sichergestellt, daß zu dem Zeitpunkt, an dem der Härtevorgang Schrumpfspannungen hervorruft, dem schrumpfenden Rohrbereich der Formenkern 2 mit seinem konischen Abschnitt 13 gegenüberliegt, so daß der Schrumpfvorgang frei von Beschädigungsgefahren ablaufen kann. Die Auslösung des Härtevorganges erfolgt auch im vorliegenden Falle durch eine Beheizung der Mineralgußmasse und Anhebung der Temperatur an der Innen- und gegebenenfalls an der Außenseite der Mineralgußmasse auf eine vorgegebene Auslösetemperatur, so daß auch mit der vorstehend beschriebenen Formvorrichtung ein schneller Herstellungsvorgang durchführbar ist.

Sobald der unterste Bereich des fortschreitend in Bildung befindlichen Rohres eine hinreichende Formstabilität erreicht hat, wird in der Regel kurz nach dem Herausbewegen des Formenkerns 2 aus dem Bereich des untersten Mantelsegments 6 dieses unterste Mantelsegment 6 in seine in Fig. 5 veranschaulichte Außerbetriebsstellung gefahren in der es verbleiben, aber auch dazu verwendet werden kann, durch horizontales Verfahren in eine Betriebsstellung an einem zweiten Formenkern 2 verbracht werden kann. Mit Hilfe dieses zweiten Formenkerns kann nun ein weiteres Rohr unter Verwendung der gleichen Mantelsegmente 6 hergestellt werden, die jeweils zuvor in einer Zuordnung zum ersten Formenkern Verwendung gefunden hatten. Auf diese Weise kann mit einem Formenmantel 3 und relativ einfachen Bewegungen für die Mantelsegmente 6 eine quasikontinuierliche Fertigung durchgeführt werden.

Sobald der erste Formenkern 2 das oberste Mantelsegment 6 des Formenmantels 3 verlassen hat und dieses zur Ausschalung in Außerbetriebsstellung überführt wurde, kann mit Hilfe des Förderbandes 56 das fertige Rohr aus der Fertigungsposition in eine Weiterverwendungsposition überführt und die Formvorrichtung für einen nachfolgenden Fertigungsvorgang vorbereitet werden, für den der erste Formenkern 2 wieder in seine Betriebsausgangsstellung zurückverbracht wird.

Bei Verwendung einer Formvorrichtung mit zwei Formenkernen 2 können getrennte Trichter 29 und eine für diese gemeinsame Füllvorrichtung 4 oder auch getrennte Füllvorrichtungen 4 zum Einsatz kommen. Die Verfahrbewegung der Mantelsegmente 6 für eine Zuordnung zum ersten oder zum zweiten Formenkern 2 kann sich im wesentlichen auf eine horizontale Verfahrbewegung der Teile beschränken, da die Mantelsegmente 6 in ihrer Höhenposition verbleiben.

Zur Reibminderung ist auch bei dieser Formvorrichtung ein Gleitfilm 30 in schon beschriebener Ausführung vorgesehen, der den Formenkern zu Beginn des Herstellungsvorganges bis über den Arbeitsbereich hinaus nach unten hin umgibt. Bei Aufwärtsbewegung des Formenkerns verbleibt der Gleitfilm 30, sofern er aus einer Schlauchfolie besteht, innerhalb des Arbeitsbereiches des Formenmantels 3, während sich der Formenkern 2 in der Schlauchfolie nach oben verlagert.

Es versteht sich, daß das Herstellungsverfahren und die vorstehend beschriebenen Formvorrichtungen in mannigfacher Hinsicht modifiziert werden können. So ist es zum Beispiel denkbar, die Relativbewegung von Formenkern 2 zu Formenmantel 3 durch eine Kombination einer Aufwärtsbewegung des Formenkerns 2 und einer Abwärtsbewegung des Formenmantels 3 zu verwirklichen.

## Patentansprüche

1. Verfahren zur Herstellung von Rohren oder rohrähnlichen Formkörpern aus Polymerbeton, bei dem Mineralgußmasse in eine mit ihrer Hauptachse vertikal ausgerichtete, einen Formenkern und einen Formenmantel umfassende Formvorrichtung eingefüllt und gerüttelt und anschließend einem Härtevorgang unterzogen wird, **dadurch gekennzeichnet,** daß der Formkörper entlang seiner Mittelachse abschnittsweise durch Füllen von aufeinanderfolgenden Längsabschnitten des Formraums der Formvorrichtung mit Mineralgußmasse und Rütteln der Mineralgußmasse im Befüllungsbereich aufgebaut und phasenversetzt in gleicher Richtung fortschreitend gehärtet wird.

2. Verfahren nach Anspruch 1, **dadurch gekennzeichnet,** daß die in die Formvorrichtung eingefüllte Mineralgußmasse entlang der Mittelachse des Formkörpers kontinuierlich fortschreitend gerüttelt und erwärmt wird.

3. Verfahren nach Anspruch 1 oder 2, **dadurch gekennzeichnet,** daß zum Auslösen des Härtevorgangs die Mineralgußmasse entlang der Mittelachse des Formkörpers fortschreitend innen- und/oder außenseitig in der Formvorrichtung erwärmt wird.

4. Verfahren nach einem der Ansprüche 1 bis 3, **dadurch gekennzeichnet,** daß das abschnittsweise Füllen des Formraums der Formvorrichtung mit Mineralgußmasse intermittierend vorgenommen wird.

5. Verfahren nach einem der Ansprüche 1 bis 4, **dadurch gekennzeichnet,** daß der Formkörper entlang seiner Mittelachse fortschreitend innen- und außenseitig aus der Formvorrichtung ausgeschalt wird.

6. Verfahren nach Anspruch 5, **dadurch gekennzeichnet,** daß der Formkörper außenseitig abschnittsweise und innenseitig kontinuierlich fortschreitend ausgeschalt wird.

7. Verfahren nach einem der Ansprüche 1 bis 6, **dadurch gekennzeichnet,** daß bei einem Muffenrohr als Formkörper mit dem Aufbau des Formkörpers am Muffenende begonnen wird.

8. Vorrichtung zum Herstellen von Rohren oder rohrähnlichen Formkörpern aus Polymerbeton, mit einer Formvorrichtung mit vertikaler Hauptachse (7), die einen Formenkern (2) und einen Formenmantel (3) umfaßt und einen von diesen begrenzten Formraum (5) aufweist und mit einer Füllvorrichtung oberhalb des oberen Endes des Formraums, **dadurch gekennzeichnet,** daß der Formenmantel (3) übereinander angeordnete, mehrteilige Mantelsegmente aufweist, deren Segmentteile (7,8) jeweils aus einer ringförmig geschlossenen Betriebsstellung in eine Außerbetriebsstellung auseinanderbewegbar sind, der Formkern (2) in axial begrenzte Abschnitte (9,10,11,12,13) unterteilt ist, die unterschiedliche Behandlungszonen bilden, Formenmantel (3) und Formenkern (2) relativ zueinander axial bewegbar sind, und die Füllvorrichtung (4) in einem Bereich oberhalb der oberen Endstellung für die Mantelsegmente (6) begrenzt vertikal auf- und abbewegbar ist.

9. Vorrichtung nach Anspruch 8, **dadurch gekennzeichnet,** daß als Behandlungszonen eine Rüttelzone (10) und/oder eine Dämpfungszone (11) und/oder eine Heizzone (12) und/oder eine Kühlzone (13) vorgesehen sind.

10. Vorrichtung nach Anspruch 8 oder 9, **dadurch gekennzeichnet,** daß die Mantelsegmente (6) eine untereinander gleiche Höhe haben und zur Bildung eines in axialer Richtung in der Höhe stufenweise anwachsenden Formenmantels (3) aufeinanderfolgend übereinander anbringbar und zu einem geschlossenen Formenmantel zusammensetzbar sind.

11. Vorrichtung nach einem der Ansprüche 8 bis 10, **dadurch gekennzeichnet,** daß die Mantelsegemente (6) in der Betriebsstellung ihrer Segmentteile (7,8) aus einer oberen Endstellung axial entlang dem Formenkern (2) in eine untere Endstellung und aus dieser einzeln nacheinander nach Übergang der Segmentteile (7,8) in die Außerbetriebsstellung zurück in die obere Endstellung bewegbar sind.

12. Vorrichtung nach Anspruch 11, **dadurch gekennzeichnet,** daß die Mantelsegmente mittels Führungsvorrichtungen (38,39;40,41) und Bewegungsantrieben (42,43,44,45,46) in einem geschlossenen Kreislauf geführt sind.

13. Vorrichtung nach Anspruch 12, **dadurch gekennzeichnet,** daß die Mantelsegmentteile (7,8) auf ihrem Rücklaufweg von der unteren zur oberen Endstellung vorübergehend um eine vertikale Achse in eine Inspektions- und Wartungsstellung klappbar sind.

14. Vorrichtung nach einem der Ansprüche 8 bis 13, **dadurch gekennzeichnet,** daß die Mantelsegmentteile (7,8) in ihrer Betriebsstellung untereinander und im Betrieb einander benachbarte Mantelsegmente (6) gegenseitig verriegelbar sind.

15. Vorrichtung nach einem der Ansprüche 8 bis 14, **dadurch gekennzeichnet,** daß der Formenkern (2) über die gesamte Länge seines Arbeitsbereiches von einem Gleitfilm umgeben ist.

16. Vorrichtung nach Anspruch 15, **dadurch gekennzeichnet,** daß der Gleitfilm von einer Schlauchfolie (30) gebildet ist.

17. Vorrichtung nach Anspruch 16, **dadurch gekennzeichnet,** daß die Schlauchfolie (30) von mehreren vor dem Einlauf in den Formenmantel untereinander fortlaufend zu einem Schlauch zusammengeschweißten Flachbahnen (31) besteht, die von Vorratsrollen (32) im oberen Bereich des Formenkerns ablaufen.

18. Vorrichtung nach Anspruch 15, **dadurch gekennzeichnet,** daß der Gleitfilm von einer Gleifflüssigkeit gebildet ist, die aus über den Umfang und die Höhe des Formenkerns (2) verteilt angeordneten Austrittsöffnungen austritt und die Außenfläche des Formenkerns (2) überzieht.

19. Vorrichtung nach Anspruch 8, **dadurch gekennzeichnet,** daß der Hubweg der Füllvorrichtung (4) etwa der Höhe eines Mantelsegments (6) entspricht.

20. Vorrichtung nach einem der Ansprüche 8 bis 10 oder 14 bis 18, **dadurch gekennzeichnet,** daß der Formenmantel (3) ein axial ortsfestes Vorrichtungsteil bildet und der Formenkern (2) axial zwischen einer unteren Startstellung zu Beginn eines Herstellungsvorganges und einer oberen Schlußstellung am Ende des Herstellungsvorganges verschiebbar ist.

21. Vorrichtung nach Anspruch 20, **dadurch gekennzeichnet,** daß die Füllvorrichtung (4) zwischen einer unteren Füllausgangsstellung unmittelbar oberhalb eines untersten Mantelsegmentes (6) des durch Zusammensetzen von Mantelsegmenten (6) zu bildenden Formenmantels (3) und einer oberen Füllendstellung unmittelbar oberhalb des obersten Mantelsegmentes (6) des fertiggestellten Formenmantels (3) vertikal verfahrbar ist.

22. Vorrichtung nach Anspruch 20 oder 21, **dadurch gekennzeichnet,** daß sie zwei parallell nebeneinander im Abstand angeordnete Formenkerne (2) umfaßt und die Mantelsegmente (6) einzeln nacheinander aus einer Zuordnung zum ersten Formenkern (2) in eine positionsgleiche Zuordnung zum zweiten Formenkern (2) überführbar sind.

23. Vorrichtung nach einem der Ansprüche 20 bis 22, **dadurch gekennzeichnet,** daß die Füllvorrichtung (4) für eine abwechselnde Befüllung des den ersten oder des den zweiten Formenkern (2) umgebenden Formraums (5) umstellbar ist.

## Claims

1. A method of producing pipes or pipe-like moulded bodies from polymer concrete in which mineral casting composition is introduced into a moulding device comprising a mould core and a mould shell and having a principally vertical axis, after which said composition is riddled and then subjected to a hardening process, characterised in that the moulded body is built up along its central axis portion-wise by the filling of successive longitudinal portions of the mould space in the moulding device with mineral casting composition and riddling of the mineral casting composition in the filling area and is then progressively hardened with phase offset in the same direction.

2. A method according to Claim 1, characterised in that the mineral casting composition introduced into the moulding device is continually and progressively riddled and heated along the cental axis of the moulding device.

3. A method according to Claim 1 or 2, characterised in that for triggering the hardening process the mineral casting composition is progressively internally and/or externally warmed in the moulding device along the central axis of the moulded body.

4. A method according to one of Claims 1 to 3, characterised in that the portion-wise filling of the mould space of the moulding device with mineral casting composition takes place intermittently.

5. A method according to one of Claims 1 to 4, characterised in that the casing is removed from the moulding device progressively from the inside and outside of the moulded body and along its central axis.

6. A method according to Claim 5, characterised in that the casing is stripped from the moulded body progressively, continuously from the inside and in portions from the outside.

7. A method according to one of Claims 1 to 6, characterised in that when the moulded body is a socket pipe, the build-up of the moulded body is started at the socket end.

8. An apparatus for producing pipes or pipe-like moulded bodies from polymer concrete with a mould device having a principally vertical axis (7) and which comprises a mould core (2) and a mould shell (3) and a mould space (5) bounded by the latter and with a filling device above the top end of the mould space, characterised in that the mould shell (3) comprises superimposed multi-part shell segments of which the segment parts (7, 8) are in each case adapted for movement apart from each other, from an annularly closed operative position into an inoperative position, the mould core (2) is subdivided into axially defined portions (9,10,11,12,13) which form different treatment zones, mould shell (3) and mould core (2) being adapted for axial movement in relation to one another and the filling device (4) being adapted for limited vertical upwards and downwards movement above the extreme upper position of the shell segments (6).

9. An apparatus according to Claim 8, characterised in that the treatment zones provided are a riddling zone (10) and/or a damping zone (11), and/or a heating zone (12) and/or a cooling zone (13).

10. An apparatus according to Claim 8 or 9, characterised in that the shell segments (6) are of the same height as one another and can, in order to form a mould shell (3) which grows stepwisely in height in the axial direction, be moved successively into superposed positions and can be assembled into one closed mould shell.

11. An apparatus according to one of Claims 8 to 10, characterised in that the shell segments (6), in the operative position of the segment parts (7, 8), can be moved out of an extreme upper position axially along the mould core (2) into an extreme lower position and individually and successively out of this and back into the extreme upper position after the segment parts (7, 8) have moved into the inoperative position.

12. An apparatus according to Claim 11, characterised in that the shell segments are guided in a closed circuit by guidance means (38,39;40,41) and motional drives (42,43,44,45,46).

13. An apparatus according to Claim 12, characterised in that the shell segments (7, 8), on their way back from the lower extreme to the upper extreme position can temporarily be folded about a vertical axis and into an inspection and maintenance position.

14. An apparatus according to one of Claims 8 to 13, characterised in that in their operative position the shell segment parts (7, 8) can be interlocked with one another and shell segments (6) which are adjacent one another in operation can be interlocked in respect of one another.

15. An apparatus according to one of Claims 8 to 14, characterised in that the mould core (2) is surrounded by a lubricant film over the total length of its working zone.

16. An apparatus according to Claim 15, characterised in that the lubricant film is formed by a tubular foil (30).

17. An apparatus according to Claim 16, characterised in that the tubular foil (30) consists of a plurality of flat sheets (31) which prior to entering the mould shell are welded together progressively to form a tube, the flat sheets (31) running off supply rolls (32) in the upper region of the mould core.

18. An apparatus according to Claim 15, characterised in that the lubricant film is formed by a lubricant fluid which emerges from outlet orifices distributed over the periphery and the height of the mould core (2) and which coats the outside surface of the mould core (2).

19. An apparatus according to Claim 8, characterised in that the travel of the filling device (4) corresponds substantially to the height of the shell segment (6).

20. An apparatus according to one of Claims 8 to 10 or 14 to 18, characterised in that the mould shell (3) constitutes an axially rigid part of the apparatus and the mould core (2) is displaceable axially between a lower starting position at the onset of the production process and an upper final position at the end of the production process.

21. An apparatus according to Claim 20, characterised in that the filling device (4) is adapted for vertical movement between a lower filling commencement position directly above a lowest shell segment (6) of the mould shell (3) which is to be formed by the fitting together of shell segments (6) and an upper filling finished position directly above the topmost shell segment (6) of the finished mould shell (3).

22. An apparatus according to Claim 20 or 21, characterised in that it comprises two parallel mould cores (20) which are spaced apart parallel with each other and in that the shell segments (6) can be moved individually and one after another out of a correlation with the first mould core (2) into an identical position but in correlation with the second mould core (2).

23. An apparatus according to one of Claims 20 to 22, characterised in that the filling device (4) can be switched over for alternate filling of the mould space (5) surrounding the first or alternatively the second mould core (2).

## Revendications

1. Procédé de fabrication de tuyaux ou d'éléments moulés semblables en béton synthétique au cours duquel une masse minérale de moulage est versée et mise en vibration dans un dispositif de moulage à axe principal orienté verticalement comprenant un noyau et un surmoule et est ensuite soumise à un processus de polymérisation, caractérisé en ce que l'élément moulé est construit par sections le long de son axe central par remplissage de sections longitudinales successives du volume de moulage du dispositif de moulage avec une masse minérale de moulage et mise en vibration de la masse minérale de moulage dans la zone de remplissage et est polymérisé progressivement avec décalage des phases dans la même direction.

2. Procédé suivant la revendication 1, caractérisé en ce que la masse minérale de moulage remplissant le dispositif de moulage est continuellement mise en vibration et chauffée le long de l'axe central de l'élément moulé.

3. Procédé suivant la revendication 1 ou 2, caractérisé en ce que, pour déclencher le processus de polymérisation, la masse minérale de moulage est progressivement chauffée le long de l'axe central de l'élément moulé du côté intérieur et/ou du côté extérieur dans le dispositif de moulage.

4. Procédé suivant l'une quelconque des revendications 1 à 3, caractérisé en ce que le remplissage par sections du volume de moulage du dispositif de moulage avec une masse minérale de moulage est réalisé de manière intermittente.

5. Procédé suivant l'une quelconque des revendications 1 à 4, caractérisé en ce que l'élément moulé est progressivement démoulé du dispositif de moulage le long de son axe central du côté intérieur et du côté extérieur.

6. Procédé suivant la revendication 5, caractérisé en ce que l'élément moulé est démoulé par sections du côté extérieur et en continu du côté intérieur.

7. Procédé suivant l'une quelconque des revendications 1 à 6, caractérisé en ce que, pour un tuyau à emboîtement comme élément moulé, on commence la construction de l'élément moulé par l'extrémité d'emboîtement à embout femelle.

8. Dispositif pour la fabrication de tuyaux ou d'éléments moulés semblables à des tuyaux en béton synthétique comportant un dispositif de moulage à axe principal vertical (7), qui comprend un noyau (2) et un surmoule (3) et présente un volume de moulage (5) délimité par ceux-ci, et un dispositif de remplissage au-dessus de l'extrémité supérieure du volume de moulage, caractérisé en ce que le surmoule (3) présente des segments d'enveloppe en plusieurs parties disposés l'un au-dessus de l'autre, dont les parties de segment (7, 8) peuvent être respectivement écartées l'une de l'autre d'une position fermée annulaire de service vers une position hors service, le noyau (2) est divisé en sections (9, 10, 11, 12, 13) limitées axialement, qui forment des zones de traitement différentes, le surmoule (3) et le noyau (2) sont mobiles l'un par rapport à l'autre en direction axiale et le dispositif de remplissage (4) est mobile verticalement de manière limitée vers le haut et vers le bas dans une zone située au-dessus de la position finale supérieure des segments d'enveloppe (6).

9. Dispositif suivant la revendication 8, caractérisé en ce que, comme zones de traitement, sont prévues une zone de mise en vibration (10) et/ou une zone d'amortissement (11) et/ou une zone de chauffage (12) et/ou une zone de refroidissement (13).

10. Dispositif suivant la revendication 8 ou 9, caractérisé en ce que les segments d'enveloppe (6) ont tous la même hauteur et peuvent être placés l'un sur l'autre afin de former un surmoule (3) croissant par étapes progressivement en hauteur et peuvent être assemblés pour former un surmoule fermé.

11. Dispositif suivant l'une quelconque des revendications 8 à 10, caractérisé en ce que, dans la position de service de leurs parties de segment (7, 8), les segments d'enveloppe (6) peuvent être déplacés axialement le long du noyau (2) d'une position finale supérieure vers une position finale inférieure et de celle-ci individuellement l'un après l'autre en retour vers la position finale supérieure, après passage des parties de segment (7, 8) dans la position hors service.

12. Dispositif suivant la revendication 11, caractérisé en ce que les segments d'enveloppe sont guidés en circuit fermé au moyen de dispositifs de guidage (38, 39, 40, 41) et de mécanismes d'entraînement (42, 43, 44, 45, 46).

13. Dispositif suivant la revendication 12, caractérisé en ce que les parties de segment d'enveloppe (7, 8) peuvent être tournées temporairement dans une position d'inspection et de maintenance autour d'un axe vertical sur leur chemin de retour de la position finale inférieure vers la position finale supérieure.

14. Dispositif suivant l'une des revendications 8 à 13, caractérisé en ce que les parties de segment d'enveloppe (7, 8) peuvent être verrouillées entre elles dans leur position de service, et des segments d'enveloppe (6) adjacents peuvent en service être mutuellement verrouillés entre eux.

15. Dispositif suivant l'une des revendications 8 à 14, caractérisé en ce que le noyau (2) est entouré d'un film lubrifiant sur toute la longueur de sa zone de travail.

16. Dispositif suivant la revendication 15, caractérisé en ce que le film lubrifiant est constitué par une pellicule en forme de gaine (30).

17. Dispositif suivant la revendication 16, caractérisé en ce que la pellicule en forme de gaine (30) se compose de plusieurs bandes planes (31) soudées l'une à l'autre en continu pour former une gaine avant l'entrée dans le surmoule, qui se déroulent de rouleaux de stockage (32) à l'extrémité supérieure du noyau.

18. Dispositif suivant la revendication 15, caractérisé en ce que le film lubrifiant est constitué par un liquide lubrifiant, qui sort d'ouvertures réparties sur la périphérie et sur la hauteur du noyau (2) et recouvre la surface extérieure du noyau (2).

19. Dispositif suivant la revendication 8, caractérisé en ce que le chemin de levage du dispositif de remplissage (4) correspond environ à la hauteur d'un segment d'enveloppe (6).

20. Dispositif suivant l'une quelconque des revendications 8 à 10 ou 14 à 18, caractérisé en ce que le surmoule (3) forme une partie de dispositif axialement fixe et en ce que le noyau (2) peut être déplacé axialement entre une position de départ inférieure au début d'un processus de fabrication et une position finale supérieure à la fin du processus de fabrication.

21. Dispositif suivant la revendication 20, caractérisé en ce que le dispositif de remplissage (4) peut être déplacé verticalement entre une position inférieure de début de remplissage immédiatement au-dessus d'un segment d'enveloppe (6) le plus bas du surmoule (3) à former par assemblage de segments d'enveloppe (6) et une position supérieure de fin de remplissage immédiatement au-dessus du segment d'enveloppe (6) le plus haut du surmoule (3) terminé.

22. Dispositif suivant la revendication 20 ou 21, caractérisé en ce qu'il comprend deux noyaux (2) disposés parallèlement à une certaine distance l'un de l'autre et en ce que les segments d'enveloppe (6) peuvent être transférés individuellement l'un après l'autre d'une disposition associée au premier noyau (2) vers une disposition semblable associée au deuxième noyau (2).

23. Dispositif suivant l'une quelconque des revendications 20 à 22, caractérisé en ce que le dispositif de remplissage (4) peut être déplacé pour effectuer alternativement un remplissage du volume de moulage (5) entourant le premier ou le deuxième noyau (2).
